# EUROPÄISCHE PATENTSCHRIFT

(11) **EP 0 968 867 B1**
(45) Veröffentlichungstag und Bekanntmachung des Hinweises auf die Patenterteilung: **25.09.2002**
(21) Anmeldenummer: 98890190.6
(22) Anmeldetag: 30.06.1998
(51) Int. Cl.: B60K 17/22, B60B 35/14, F16D 3/205

(54) **Halbachsenfixierung**
Half axle fixation
Fixation d'un demi-arbre

(43) Veröffentlichungstag der Anmeldung: 05.01.2000
(73) Patentinhaber: Pankl R&D GmbH, 8600 Bruck an der Mur (AT)
(72) Erfinder: Pankl, Gerold, Ing., 8600 Bruck an der Mur (AT)
(74) Vertreter: Patentanwälte BARGER, PISO & PARTNER

(56) Entgegenhaltungen:
- WO-A-93/02297
- DE-A- 3 134 270
- DE-A- 3 739 927
- GB-A- 1 252 889
- US-A- 3 041 858
- US-A- 3 310 961
- PATENT ABSTRACTS OF JAPAN vol. 012, no. 241 (M-716), 8. Juli 1988 & JP 63 030611 A (NISSAN MOTOR CO LTD), 9. Februar 1988
- PATENT ABSTRACTS OF JAPAN vol. 096, no. 007, 31. Juli 1996 & JP 08 080704 A (NTN CORP), 26. März 1996

## Beschreibung

Die Erfindung betrifft eine Anordnung für ein Kraftfahrzeug, enthaltend ein Bauteil wie eine Radnabe, Getriebe, Differential oder eine andere Krafteinleitung und eine in dem Bauteil fixierte Halbachse, insbesondere eine ein Tripodgelenk aufweisende Halbachse, wobei
- die Halbachse zumindest an einer ihrer Seiten über eine hohlkugelige Führungsfläche, deren Mittelpunkt auf der Achse liegt, verfügt und
- ein Druckstab vorgesehen ist, der an einem Ende eine Kugelform aufweist, deren Durchmesser dem Durchmesser der hohlkugeligen Führungsfläche entspricht und in ihr gelagert ist, entsprechend dem Oberbegriff des Anspruches 1.

Eine derartige Anordnung ist aus der DE A 3 739 927 bekannt. Um auch bei hohen Drehzahlen hohe Momente bei maximalem Beugungswinkel übertragen zu können, schlägt diese Druckschrift vor, den inneren Gelenkkörper mehrteilig auszubilden und so besonders an den äußeren Gelenkkörper anzupassen. In dieser Druckschrift werden zwei Anwendungsgebiete für ein solches Gleichlaufgelenk beschrieben, davon betrifft eines einen Antriebsstrang eines Kraftfahrzeuges, die andere eine hydraulische Pumpe. Beim Antriebsstrang des Kraftfahrzeuges wird auf die axiale Längenänderung beim Beugen des Gelenkes kein Bedacht genommen, bei der hydraulischen Pumpe wird der Kolben durch windschief angeordnete in ihrer Lage veränderliche Druckstäbe in die gewünschte taumelnde Bewegung versetzt, die dann auf achsparallele Kolben übertragen wird.

In Antriebssträngen bekannte Anordnungen zu Ausgleich der axialen Erstreckung beim Beugen des Gelenkes gehen beispielsweise aus der JP 63 030611 A hervor und weisen Druckstäbe auf, die bei gestrecktem Gelenk in der Achse liegen und unter der Kraft einer Feder stehen, um so die Längenänderungen beim Beugen auszugleichen.

Üblicherweise werden Halbachsen von Kraftfahrzeugen in axialer Richtung dadurch fixiert, daß an ihren Stirnenden sphärische Bereiche ausgebildet sind, an die ebenfalls sphärisch ausgebildete Gegenflächen der Radnabe bzw. am anderen Ende des Differenzials, Getriebes, oder einer anderen Krafteinleitungsstelle, meist durch eine Feder, angepreßt werden.

Durch diese Feder werden die durch die Radaufhängung bewirkten kinematischen Bewegungen in axialer Richtung der Halbachse, die üblicherweise im Millimeterbereich liegen, ausgeglichen. Bei geringen Bewegungen kann auf diese Feder auch verzichtet werden.

Da es somit üblicherweise nur zu Schwenkbewegungen zwischen der Radnabe und der Halbachse kommt, ist diese Lösung bei konventionell aufgebauten Halbachsen durchaus praktikabel.

Es hat sich nun bei einer Vielzahl von Verwendungen, insbesondere bei Hochleistungsfahrzeugen statt der bisher üblichen homokinetischen Gelenke das sogenannte Tripod durchgesetzt, da es bei vergleichbarer Größe eine wesentlich höhere Belastbarkeit bzw. bei gleicher Last eine wesentlich kleinere Bauweise aufweist und auch geringere Übertragungsverluste mit sich bringt.

Ein bei der Verwendung eines Tripods auftretendes und bisher ungelöstes Problem ist aber die Tatsache, daß es zu einem geringen, aber doch über die Tragfähigkeit der Kugelkalotten hinausgehenden radialen Versatz des Halbachsenendes kommt. Dies bedeutet, daß statt der großflächigen sphärischen Kontaktzone zwischen Achsenstirnseite und Radnabe eine lineare Kantenpressung auftritt, die sehr rasch zu Verschleiß und zu Zerstörung der axialen Fixierung der Halbachse führt. Dazu kommt noch der gerade bei den Anwendungsgebieten des Tripods extrem unangenehme Energieverlust durch die auftretenden Reibungs- und Deformationskräfte, die durch die Anordnungen des Standes der Technik nicht verringerbar sind.

Die Erfindung bezweckt hier Abhilfe zu schaffen und eine axiale Halterung für eine Halbachse anzugeben, die nicht nur, aber insbesondere bei Verwendung von Tripoden eine verlustarme und stabile Halterung schafft, die wenig Platz benötigt und wenig Masse aufweist.

Erfindungsgemäß werden diese Ziele durch die Merkmale des kennzeichnenden Teiles des Anspruches 1 erreicht und die Anordnung wird durch die Merkmale der Unteransprüche weiter verbessert.

Die Erfindung wird an Hand der Zeichnung näher erläutert. Dabei zeigt
Fig. 1 eine erfindungsgemäß ausgebildete Halbwelle,
die Fig. 2 eine Variante eines Endes einer erfindungsgemäßen Halbachsenfixierung in vergrößertem Maßstab,
die Fig. 3 wieder eine andere Variante eines Endes einer erfindungsgemäßen Halbachsenfixierung in vergrößertem Maßstab und
die Fig. 4 eine Explosionszeichnung entsprechend der Fig. 3 in perspektivischer Ansicht.

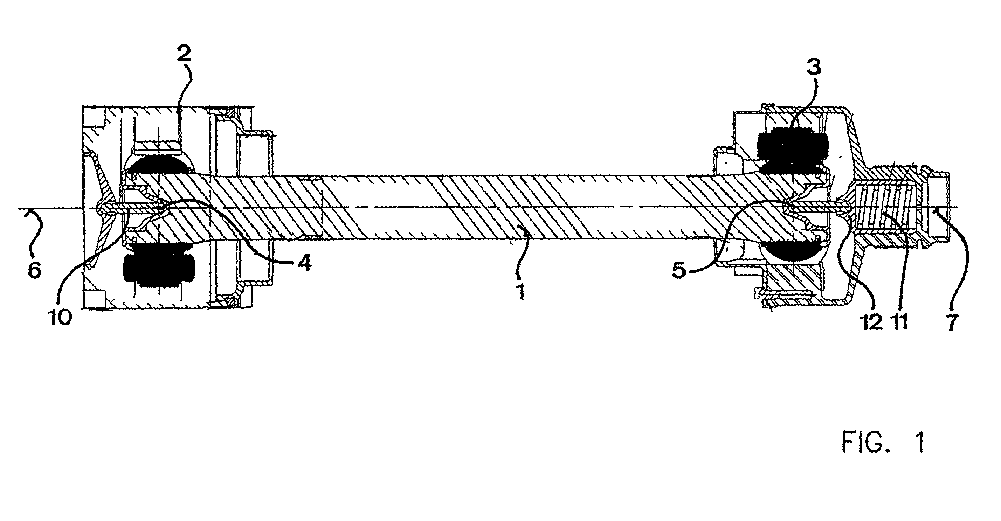

Wie aus Fig. 1 hervorgeht, ist eine erfindungsgemäße Halbachse 1 antriebsseitig in einem Tripod 2 und radseitig in einem Tripod 3 gelagert. In der in Fig. 1 dargestellten gestreckten Lage fluchten die Achsenmittel 4 und 5 in der Mittelebene der Tripodgelenke 2, 3 mit den Achsen 6, 7 der kraftzuführenden bzw. kraftableitenden Bauteile. Bei Schrägstellung der Halbachse 1 ist dies nicht mehr der Fall, es kommt zu einem radialen Versatz, der die Verwendung der vorbekannten Kalotten, deren Mittelpunkt ja stets in den Gelenkmittelpunkten 4, 5 liegt, nicht weiter möglich macht.

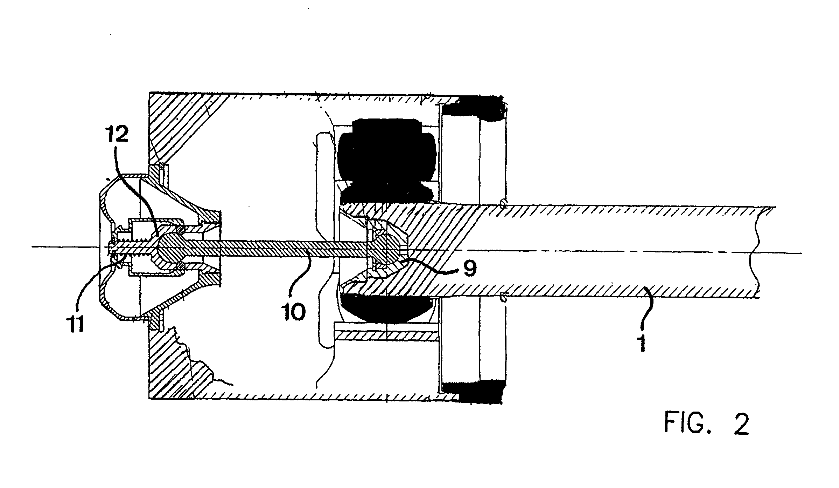

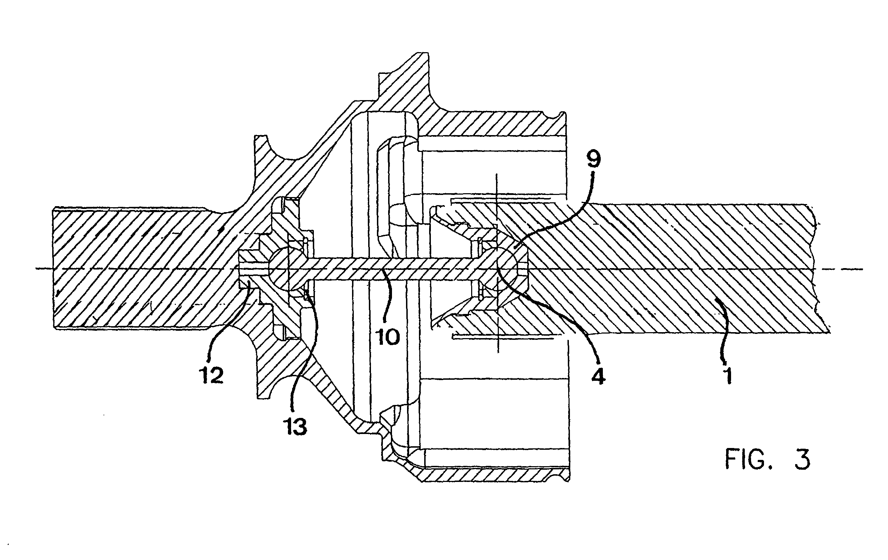

Erfindungsgemäß sind nun, wie insbesondere aus den Fig. 2 und 3 ersichtlich ist, in topf- oder trichterartigen Lagern 9 sphärische Flächen vorgesehen, deren Mittelpunkt bei fluchtender Lage der Wellen im Lagermittelpunkt 4 liegt, und bilden eine kugelkalottenförmige Ausnehmung.

Im wesentlichen spielfrei in diese kugelkalottenförmige Ausnehmung des Lagers 9 passend, ist ein Druckstab 10 vorgesehen, dessen Enden Kugelflächen aufweisen, die mit den Hohlkugelflächen des Lagers 9 zusammenwirken können. Das andere Ende des Druckstabes 10 ist gleichermaßen ausgebildet, wobei bevorzugt beide Kugelflächen gleichen Durchmesser aufweisen, um die Herstellung und den Einbau zu erleichtern.

Die achsenferne Kugelfläche des Druckstabes 10 ist bei der Ausführungsform gemäß Fig. 3 in einem festmontierten Lager untergebracht, bei der Ausführungsform gemäß Fig. 2 in einem federbelasteten, axial verschieblichen Lager, das den Druckstab 10 in Richtung zur Halbwelle 1 hin drückt. Die Druckfeder 11 ist in einem Gehäuse untergebracht und stützt sich einerends an diesem Gehäuse, anderends am Lager ab.

Es ist an dieser Stelle darauf hinzuweisen, daß es zwischen der Welle 1, dem Lager 9, dem Druckstab 10 und dem Lager 12 sowie gegebenenfalls dessen Druckfeder 11 zu keiner Drehbewegung kommt, da diese Bauteile alle mit gleicher Winkelgeschwindigkeit rotieren.

Es kommt aber zu Schwenkbewegungen in geringem Ausmaß, die durch die Schrägstellung der rotierenden Welle bedingt sind und dabei, durch die dann außermittige Lage des Gelenkzentrums 4, zu einer Pendelbewegung um wenige Winkelgrade, die aber keine Beanspruchung gefährlicher Größe hervorruft, da die Kontaktfächen ausreichend groß sind, um gefährliche Flächenpressungen zu vermeiden.

Es muß darauf verwiesen werden, daß die Pendelbewegung der Winkelgeschwindigkeit des Druckstabes überlagert wird, sodaß diese nicht mehr mathematisch exakt die gleiche ist wie die der benachbarten Bauteile, doch ist dies im technischen Maßstab vernachläßigbar.

In Fig. 1 ist am rechten Ende, der Seite der Radnabe, eine federnde Ausgestaltung der Achshalterung ersichtlich, bei der eine Druckfeder 11 in der Radnabe axial verschieblich gelagert ist, wobei der Federkorb 12 das Lager für den Druckstab 10 trägt.

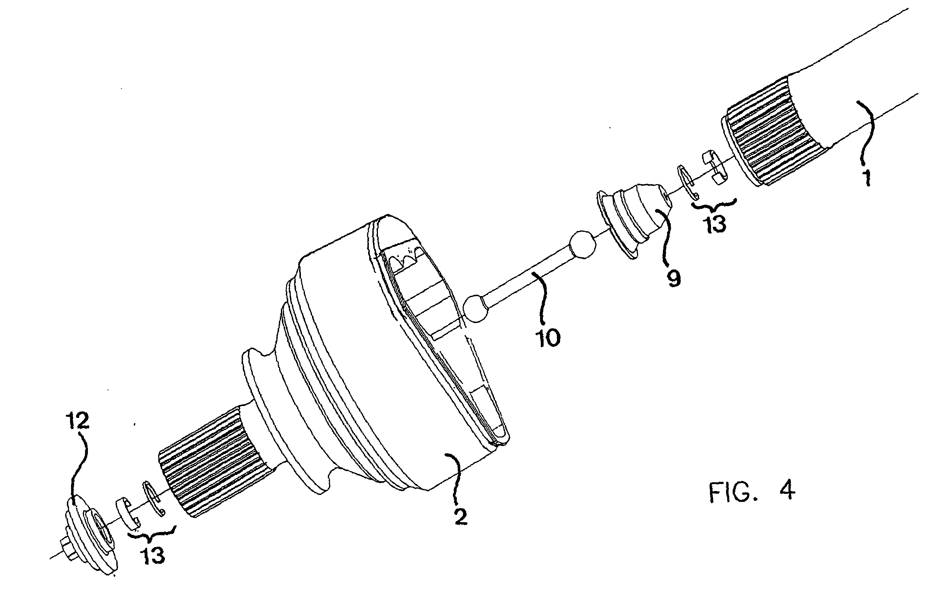

Aus der Fig. 4 ist die axiale Anordnung des Tripodgehäuses 2, des Druckstabes 10 und des topfförmigen Lagers 9 mit dem lagerseitigen Ende der Halbachse 1 zu entnehmen. Links des Tripodgehäuses 2 ist das Gegenlager 12 dargestellt, zu dem ein Sicherungsringsystem 13 gehört, durch das der Druckstab 10 in axialer Richtung gegen ein Hinausziehen gesichert wird, siehe auch Fig. 3.. Ein analoges Sicherungsringsystem 13 ist zwischen dem Lager 9 und der Halbachse 1 dargestellt, sichert aber ebenfalls den Druckstab im Lager 9.

Die Erfindung ist nicht auf die dargestellten Ausführungsbeispiele beschränkt. So kann sie auch bei Halbachsen verwendet werden, die in homokinetischen Gelenken gelagert sind und man erzielt damit gegenüber den vorbekannten Halterungen einen verringerten Platzbedarf und eine geringere Masse. Die Ausbildung der Lager 9, 12 muß nicht in der dargestellten Weise erfolgen, sondern kann vom Fachmann in Kenntnis der Erfindung an die jeweiligen Einbausituationen angepaßt werden. In Fällen, in denen die Halbachse 1 voll ausgeführt ist, können die in der Halbachse vorgesehenen Lager 9 naturgemäß eine andere Form annehmen oder direkt in der Halbachse ausgebildet sein. Die Druckfedern 11 müssen nicht die dargestellte Form haben, sondern können in Abhängigkeit von der gewünschten Federkraft und dem notwendigen Federweg auch aus Tellerfederpaketen od.ähnl. bestehen.

Üblicherweise wird die Länge der Druckstäbe gleich groß und so gewählt, daß in gestreckter Lage der Halbachsenkonstruktion die Achsenmittel 4, 5 in der Mittelebene der Tripodgelenke liegen. Durch Austausch durch ungleich lange Druckstäbe kann diese Lage und damit die Lage der Kontaktpunkte im Tripodgelenk verändert werden, was es erlaubt, im Falle der Abnutzung der Kontaktbereiche neue Kontaktbereiche bereitzustellen und so die Gesamtlebensdauer des Gelenkes zu verlängern.

Wesentlich ist, daß statt der vorbekannten einfachen Bewegung um einen gemeinsamen Mittelpunkt zwei Bewegungen um zwei Mittelpunkte, die fixen Abstand zueinander aufweisen, vorgesehen sind. Damit ist es möglich, jede Art des Achsenversatzes sicher und zuverlässig auszugleichen, ohne daß es zu erhöhten Pressungen oder Kantenpressungen kommt. Überraschend und völlig unvorhersehbar ist die Tatsache, daß diese Fixierung kleiner und leistungsfähiger ist als die vorbekannte und durch ihren Aufbau auch kostenmäßig Vorteile bietet.

## Patentansprüche

1. Anordnung für ein Kraftfahrzeug, enthaltend ein Bauteil wie eine Radnabe, Getriebe, Differential oder eine andere Krafteinleitung und eine in dem Bauteil fixierte Halbachse (1), insbesondere eine ein Tripodgelenk (2, 3) aufweisende Halbachse, wobei
- die Halbachse zumindest an einer ihrer Seiten über eine hohlkugelige Führungsfläche (9),
deren Mittelpunkt auf der Achse (4, 5) liegt, verfügt und
- ein Druckstab (10) vorgesehen ist, der an einem Ende eine Kugelform aufweist, deren Durchmesser dem Durchmesser der hohlkugeligen Führungsfläche (9) entspricht und in ihr gelagert ist,
**dadurch gekennzeichnet, dass**
das andere Ende des Druckstabes (10) ebenfalls eine Kugelform aufweist und in einer weiteren, am entgegenstehenden Bauteil befindlichen hohlkugeligen Führungsfläche (12), deren Mittelpunkt auf der Achse (6, 7) des entgegenstehenden Bauteiles liegt, gelagert ist.

2. Anordnung nach Anspruch 1, **dadurch gekennzeichnet, daß** die hohlkugelige Führungsfläche (12) des entgegenstehenden Bauteiles unter der Kraft einer Feder (11) steht, die sie in Richtung zur Halbachse (1) hin drückt.

3. Anordnung nach Anspruch 1 oder 2, **dadurch gekennzeichnet, daß** ein weiteres Bauteil vorgesehen ist, das ebenfalls mit einer hohlkugelförmigen Führungsfläche (12) ausgestattet ist und über einen weiteren Druckstab (10) mit dem ebenfalls eine hohlkugelige Führungsfläche (9) aufweisenden anderen Ende der Halbachse (1) zusammenwirkt.

4. Anordnung nach einem der voranstehenden Ansprüche, **dadurch gekennzeichnet, daß** der Durchmesser der kugelförmigen Enden des Druckstabes (10) an beiden Seiten gleich groß ist.

## Claims

1. An assembly for a motor vehicle, comprising a component, such as a wheel hub, transmission, differential or other force transfer means and a half-axle located in the component, in particular a half-axle having a tripod joint (2,3), wherein
- the half-axle is provided, at least at one of its ends, with a hollow spherical guide surface (9), the centre point of which lies on the axis (4,5), and
- a compression rod (10) is provided which at one end is of spherical shape, the diameter of which corresponds to the diameter of the hollow spherical guide surface (9) and is mounted therein,
**characterised in that**
the other end of the compression rod (10) is also of spherical shape and is mounted in a further hollow spherical guide surface (12) which is situated on the opposing component and the centre point of which lies on the axis (6,7) of the opposing component.

2. An assembly according to Claim 1, **characterised in that** the hollow spherical guide surface (12) of the opposing component is subject to the force of a spring (11) which presses it towards the half-axle (1).

3. An assembly according to Claim 1 or 2, **characterised in that** a further component is provided, which is also provided with a hollow spherical guide surface (12) and co-operates via a further compression rod (10) with the other end of the half-axle (1) also having a hollow spherical guide surface (9).

4. An assembly according to any one of the preceding Claims, **characterised in that** the diameter of the spherical ends of the compression rod (10) is the same at both ends.

## Revendications

1. Agencement pour un véhicule automobile, comprenant une pièce, telle qu'un moyeu de roue, une boîte de vitesses, un différentiel ou une autre introduction de force, et un demi-essieu (1) fixé dans la pièce, notamment un demi-essieu comportant une articulation tripode (2, 3), dans lequel
- le demi-essieu dispose, au moins sur l'un de ses côtés, d'une surface de guidage sphérique creuse (9), dont le centre est situé sur l'axe (4, 5) et
- il est prévu une barre travaillant à la compression (10) qui, à une extrémité, présente une forme sphérique dont le diamètre correspond au diamètre de la surface de guidage sphérique creuse (9) et est montée dans celle-ci,
**caractérisé en ce que**
l'autre extrémité de la barre travaillant à la compression (10) présente également une forme sphérique et est montée dans une autre surface de guidage sphérique creuse (12) qui se trouve sur la pièce opposée et dont le centre est situé sur l'axe (6, 7) de la pièce opposée.

2. Agencement suivant la revendication 1, **caractérisé en ce que** la surface de guidage sphérique creuse (12) de la pièce opposée est soumise à la force d'un ressort (11) qui l'applique vers le demi-essieu (1).

3. Agencement suivant la revendication 1 ou 2, **caractérisé en ce qu'**il est prévu une autre pièce qui est également pourvue d'une surface de guidage de forme sphérique creuse (12) et coopère par l'intermédiaire d'une autre barre travaillant à la compression (10) avec l'autre extrémité du demi-essieu (1) comportant également une surface de guidage sphérique creuse (9).

4. Agencement suivant l'une des revendications précédentes, **caractérisé en ce que** le diamètre des extrémités de forme sphérique de la barre travaillant à la compression (10) est identique sur les deux côtés.
